# EUROPEAN PATENT APPLICATION

(11) **EP 2 865 719 A1**
(43) Date of publication of application: **29.04.2015**
(21) Application number: 13807603.9
(22) Date of filing: 21.06.2013
(51) Int. Cl.: C08L 83/07, C08K 3/00, C08L 83/05, C09J 183/05, C09J 183/07

(54) **TWO PACK TYPE CURABLE POLYORGANOSILOXANE COMPOSITION AND USE OF SAME**

(30) Priority: 22.06.2012 JP 2012141306; 20.06.2013 JP 2013129879; 20.06.2013 JP 2013129880
(71) Applicant: Momentive Performance Materials Japan LLC, Tokyo 107-6112 (JP)
(72) Inventor: SAKAKIBARA, Makoto, Tokyo 107-6112 (JP); ONO, Kazuhisa, Tokyo 107-6112 (JP); MATSUSHITA, Shigeki, Tokyo 107-6112 (JP); OKAWA, Koji, Tokyo 107-6112 (JP)
(74) Representative: Müller-Boré & Partner Patentanwälte PartG mbB
(86) International application number: PCT/JP2013/067116
(87) International publication number: WO 2013/191279

(57) **Abstract**

The invention provides a two-pack curable polyorganosiloxane composition having an excellent rapid curing property, and methods for producing an adhered article using the compositions. The two-pack curable polyorganosiloxane composition consisting of a first component and a second component, the composition comprising: (A) an alkenyl group-containing polyorganosiloxane that contains two or more alkenyl groups in the molecule; (B) a polyorganohydrogensiloxane that has two or more hydrogen atoms bonded to a silicon atom in the molecule; and (C) a platinum group catalyst, wherein the ratio of the number of the hydrogen atoms bonded to silicon atoms in (B), H_{B}, to the number of the alkenyl groups in (A), Vi_{A}, is 0.5 to 10.0; the content of (C) is 0.5 to 2000 ppm in terms of a platinum group metal; the first component comprises (A) and (C); and the second component comprises (B).

## Description

### TECHNICAL FIELD

The present invention relates to a curable polyorganosiloxane composition and to a method for producing an adhered article using the same.

In display devices such as mobile phones which have display components such as liquid crystal modules, glass or resin screens are disposed on the front side of the display devices to protect the display devices and to enhance designs. The presence of an air layer between the screen and the display device problematically causes poor viewability of the display screen due to the reflection of outside light. To solve this, a transparent layer such as an adhesive selected in accordance with the refractive index of the screen is disposed in the space of the air layer. The adhesive used here is generally a UV curable adhesive, and is applied to one of the opposed members to be bonded together. After the members are joined to each other, the adhesive is cured with UV rays.

With recent diversifications such as in designs, screen materials are often plastic resins which are less permeable to UV rays, and screen peripheries are printed to have colored trims. In such cases, UV rays are blocked and curing is frequently difficult. With this problem, Patent Literature 1 discloses a curable composition which contains a compound having on average at least one hydrolyzable silyl group in the molecule, and a compound having on average at least one polymerizable carbon-carbon double bond in the molecule. The curable composition described in Patent Literature 1 is curable rapidly with light and is also cured in the absence of light by reacting with moisture in the air. Further, Patent Literature 2 discloses a two-pack addition reactive silicone gel that is thermally curable.

### CITATION LIST

### Patent Literature

Patent Literature 1: JP2010-248347A
Patent Literature 2: JP2004-272059A

### DISCLOSURE OF INVENTION

### Technical Problem

The composition disclosed in Patent Literature 1 starts to cure in an applicator to cause the clogging of the applicator. In addition to this problem, the reaction with moisture takes a long time and the curing reaction after the members are joined together is extremely time-consuming.

The heat-curable composition disclosed in Patent Literature 2 has a long curing time when the composition is applied between a display device and a protective plate and then is cured. Thus, the protective plate may be misaligned with respect to the display device during heat curing. To prevent the misalignment of the protective plate, a possible approach will be to apply a high temperature to cure the composition in a short time. However, the degree of heat resistance of members to be bonded together makes it impossible to apply heat enough to effect curing.

Thus, there is an increasing demand for a novel curable polyorganosiloxane composition which may be cured without involving radiations or special apparatuses such as heating apparatuses and hence can bond even UV-impermeable members or poorly heat resistant members and which may be cured without being affected by outside environments such as moisture and is suited for a bonding method in which adhesive components are applied to respective substrates to be bonded together and the curing reaction is started when the adhesive components are brought into contact with each other by the joining of the substrates.

An object of the present invention is providing a two-pack curable polyorganosiloxane composition having an excellent rapid curing property, and a method for producing an adhered article using the composition.

### Solution to Problem

Aspects of the present invention and preferred embodiments thereof include the following.

The present invention 1 relates to a two-pack curable polyorganosiloxane composition consisting of a first component and a second component, the composition comprising:
(A) an alkenyl group-containing polyorganosiloxane that contains two or more alkenyl groups in the molecule;
(B) a polyorganohydrogensiloxane that has two or more hydrogen atoms bonded to a silicon atom in the molecule; and
(C) a platinum group catalyst,
wherein the ratio of the number of the hydrogen atoms bonded to silicon atoms in (B), H_{B}, to the number of the alkenyl groups in (A), Vi_{A}, is 0.5 to 10.0;
the content of (C) is 0.5 to 2000 ppm in terms of a platinum group metal;
the first component comprises (A) and (C); and
the second component comprises (B).

The present invention 2 relates to the two-pack curable polyorganosiloxane composition according to the present invention 1, wherein (A) is a linear alkenyl group-containing polyorganosiloxane.

The present invention 3 relates to the two-pack curable polyorganosiloxane composition according to the present invention 2, wherein the linear alkenyl group-containing polyorganosiloxane is an alkenyl group-containing linear polyorganosiloxane represented by the formula (Ia): 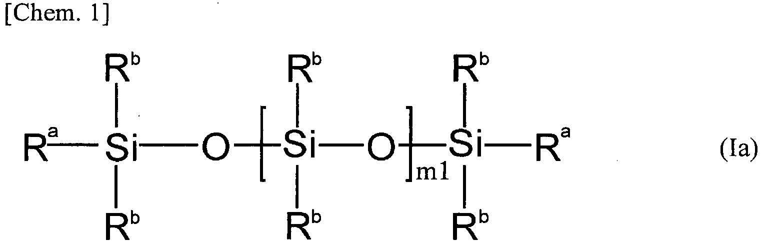 wherein
each R^{a} is independently a C₂-C₆ alkenyl group,
each R^{b} is independently a C₁-C₆ alkyl group or a phenyl group, and
ml is a number that yields a viscosity at 23°C of from 100 to 100,000 cP.

The present invention 4 relates to the two-pack curable polyorganosiloxane composition according to any of the present inventions 1 to 3, wherein (B) is one or more members selected from the group consisting of a cyclic polyorganohydrogensiloxane and a linear polyorganohydrogensiloxane.

The present invention 5 relates to the two-pack curable polyorganosiloxane composition according to the present invention 4, wherein the cyclic polyorganohydrogensiloxane is (B1) a cyclic polyorganohydrogensiloxane consisting of a Re₂HSiO_{1/2} unit, wherein each R^{e} is a hydrogen atom or a C₁-C₆ alkyl group, and a SiO_{4/2} unit, and having two or more hydrogen atoms bonded to a silicon atom in the molecule.

The present invention 6 relates to the two-pack curable polyorganosiloxane composition according to the present invention 4 or 5, wherein the linear polyorganohydrogensiloxane is a linear polyorganohydrogensiloxane in which each end is terminated with a R₃SiO_{1/2} unit and intermediate units consist of a R₂SiO_{2/2} unit, wherein each R is a hydrogen atom, a C₁-C₆ alkyl group or a phenyl group, and at least two of R are a hydrogen atom, and the viscosity at 23°C is from 1 to 10,000 cP.

The present invention 7 relates to the two-pack curable polyorganosiloxane composition according to the present invention 6, wherein the linear polyorganohydrogensiloxane is one or more polyorganohydrogensiloxanes selected from the group consisting of:
(B2) a linear polyorganohydrogensiloxane in which each end is terminated with a R^{d}₃SiO_{1/2} unit and intermediate units consists of a R^{c}R^{d}SiO_{2/2} unit and a R^{d}₂SiO_{2/2} unit, wherein R^{c} is a hydrogen atom, and each R^{d} is independently a C₁-C₆ alkyl group or a phenyl group, and the viscosity at 23°C is from 1 to 10,000 cP; and
(B3) a linear polyorganohydrogensiloxane represented by the formula (III): 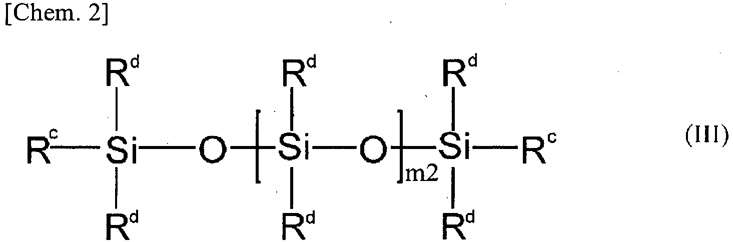 wherein
   each R^{c} is a hydrogen atom,
   each R^{d} is independently a C₁-C₆ alkyl group or a phenyl group, and
   - m2 is a number that yields a viscosity of (B3) at 23°C of from 1 to 10,000 cP; and
(B4) a linear polyorganohydrogensiloxane in which each end is terminated with a R^{c}R^{d}₂SiO_{1/2} unit and intermediate units consist of a R^{c}R^{d}SiO_{2/2} unit and a R^{d}₂SiO_{2/2} unit, wherein each R^{c} is a hydrogen atom, and each R^{d} is independently a C₁-C₆ alkyl group or a phenyl group, and the viscosity at 23°C is from 1 to 10,000 cP.

The present invention 8 relates to the curable polyorganosiloxane composition according to any of the present inventions 1 to 7, wherein the first component has a viscosity at 23°C of from 100 to 100,000 cP and the second component has a viscosity at 23°C of from 100 to 100,000 cP.

The present invention 9 relates to the two-pack curable polyorganosiloxane composition according to any of the present inventions 1 to 8, which is an adhesive for adhering two substrates by the steps comprising: applying the first component to an adhering surface of one of the two substrates, applying the second component to a adhering surface of the other of the two substrates that is the first component has not been applied, and joining the applied substrates together and curing the components to bond the substrates to each other.

The present invention 10 relates to the two-pack curable polyorganosiloxane composition according to the present invention 9, wherein the thickness of the first component applied is from 1 to 1000 µm and the thickness of the second component applied is from 1 to 1000 µm.

The present invention 11 relates to the two-pack curable polyorganosiloxane composition according to the present invention 9 or 10, wherein the ratio of the thickness of the first component applied to the thickness of the second component applied is 1:1000 to 1000:1.

The present invention 12 relates to the two-pack curable polyorganosiloxane composition according to any of the present inventions 1 to 11, which is an adhesive for a base unit having an image display section of an image display device and a light transmissive protective unit.

The present invention 13 relates to a method for producing an adhered article comprising two substrates using the two-pack curable polyorganosiloxane composition according to any of the present inventions 1 to 12, the method comprising: applying the first component to an adhering surface of one of the two substrates, applying the second component to an adhering surface of the other substrate that the first component has not been applied, and joining the applied substrates together and curing the components to bond the substrates to each other.

The present invention 14 relates to a method for producing an image display device comprising a base unit having an image display section, and a light transmissive protective unit, the base unit and the light transmissive protective being adhered to each other by the two-pack curable polyorganosiloxane composition according to any of the present inventions 1 to 12, the method comprising: applying the first component or the second component to an adhering surface of the base unit of the image display section of the image display device, applying the second component or the first component wherein in the component other than the component applied to the adhering surface of the base unit of the image display section of the image display device to an adhering surface of the light transmissive protective unit, and joining the applied base unit of the image display section of the image display device together with the applied light transmissive protective unit, and curing the components to bond the units to each other.

### Advantageous Effects of Invention

According to the present invention, a two-pack curable polyorganosiloxane composition having an excellent rapid curing property, and method for producing an adhered article using the compositions can be provided.

### BEST MODE FOR CARRYING OUT INVENTION

(A) an alkenyl group-containing polyorganosiloxane is a base polymer component in the two-pack curable polyorganosiloxane composition of the invention. The addition of (A) ensures the formation of a stable three-dimensional structure by a crosslinking reaction during curing, and thus makes it possible to control or suppress cure shrinkage and to ensure good viewability. (A) is not limited as long as the component has on average two or more alkenyl groups bonded to silicon atoms in the molecule and can form a network structure by undergoing an addition reaction with Si-H bonds in (B). Typically, the alkenyl group-containing polyorganosiloxanes have on average at least two alkenyl group-containing siloxane units represented by the general formula (I) in the molecule:

   (R^{a})ₙ₁(R^{b})ₙ₂SiO_{(4-n1-n2)/2} (I)

   wherein
   R^{a} is a C₂-C₆ alkenyl group (for example, vinyl, allyl, 3-butenyl or 5-hexenyl);
   R^{b} is a C₁-C₆ alkyl group (for example, methyl, ethyl, propyl, butyl, pentyl or hexyl) or phenyl;
   n1 is 1 or 2;
   n2 is an integer of from 0 to 2; and n1 + n2 is from 1 to 3. The average number of the alkenyl groups in the molecule is preferably from 2 to 100, and more preferably from 2 to 50.

The siloxane skeleton in (A) may be linear or branched. For easy synthesis and easy control of the average polymerization degree, (A) is preferably linear. A mixture of different types of skeletons may be used.

To facilitate synthesis and to avoid a decrease in fluidity before curing or a decrease in the heat resistance of cured products, R^{a} is preferably a vinyl group. R^{a}s may be present at any or both of an end(s) and an inner position(s) in the polyorganosiloxane molecular chain of (A). In order for the composition to achieve an excellent mechanical property after being cured, it is preferable that R^{a}s are present at least in both ends of the molecular chain.

To facilitate synthesis and to obtain an excellent balance in properties such as fluidity and mechanical strength after curing, R^{b} is particularly preferably a methyl group.

For easy synthesis, n1 is preferably 1.

From the viewpoint of workability, the viscosity of (A) at 23°C is preferably from 100 to 100,000 cP, more preferably from 100 to 10,000 cP, and particularly preferably from 300 to 4,000 cP. The weight average molecular weight of (A) is preferably adjusted such that the viscosity falls in this range. In the invention, the viscosity is a value measured with a rotational viscometer at 23°C.

Thus, preferred (A) is alkenyl group-containing linear polyorganosiloxane represented by the formula (Ia): 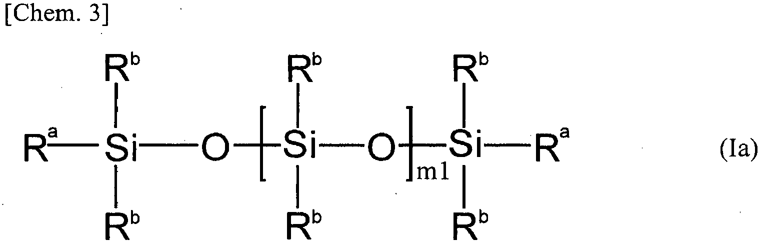 wherein
each R^{a} is independently a C₂-C₆ alkenyl group (for example, vinyl, allyl, 3-butenyl or 5-hexenyl, and preferably vinyl),
each R^{b} is independently a C₁-C₆ alkyl group (for example, methyl, ethyl, propyl, butyl, pentyl or hexyl, and preferably methyl) or a phenyl group, and
ml is a number that yields a viscosity of (A) at 23°C of from 100 to 100,000 cP (preferably from 100 to 10,000 cP, and more preferably from 300 to 4,000 cP).

More preferred (A) is alkenyl group-containing linear polyorganosiloxanes which are polymethylvinylsiloxanes in which each end is terminated with a dimethylvinylsiloxane unit and intermediate units consist of a dimethylsiloxane unit, and the viscosity at 23°C of from 100 to 100,000 cP (preferably from 100 to 10,000 cP, and more preferably from 300 to 4,000 cP).

(B) a polyorganohydrogensiloxane in the present composition functions as a crosslinking agent for (A) by undergoing an addition reaction between the hydrosilyl group in the molecule and R^{a} in (A). This component is not particularly limited as long as the component has on average two or more hydrogen atoms bonded to a silicon atom that are involved in the addition reaction to produce a cured product having a network structure. Typically, such polyorganohydrogensiloxanes have, in the molecule, two or more units represented by the general formula (II):

(R^{c})ₙ₃(R^{d})ₙ₄SiO_{(4-n3-n4)/2} (II)

wherein
R^{c} is a hydrogen atom,
R^{d} is a C₁-C₆ alkyl group (for example, methyl, ethyl, propyl, butyl, pentyl or hexyl, and preferably methyl) or a phenyl group;
n3 is 1 or 2;
n4 is an integer of from 0 to 2; and n3 + n4 is from 1 to 3.

Example and preferred example of R^{d} are similar to those mentioned for R^{b} in (A). For easy synthesis, n3 is preferably 1.

The siloxane skeleton in (B) may be linear, branched or cyclic, and is preferably linear or cyclic. Mixtures of such skeletons may be used.

The viscosity of (B) at 23°C is preferably from 1 to 10,000 cP, more preferably from 1 to 1,000 cP, still more preferably from 1 to 200 cP, and particularly preferably from 1 to 50 cP.

Examples of the cyclic component (B) include (B1) a cyclic polyorganohydrogensiloxane consisting of a R^{e}₂HSiO_{1/2} unit, wherein each R^{e} is a hydrogen atom or a C₁-C₆ alkyl group (for example, methyl, ethyl, propyl, butyl, pentyl or hexyl, and preferably methyl), and a SiO_{4/2} unit, and having two or more hydrogen atoms bonded to a silicon atom in the molecule.

(B1) the cyclic polyorganohydrogensiloxane consists of a R^{e}₂HSiO_{1/2} unit and a SiO_{4/2} unit, and has two or more hydrogen atoms bonded to a silicon atom in the molecule. The number of the hydrogen atoms in the molecule of (B1) is preferably from 3 to 100, and more preferably from 3 to 50. For reasons such as easy synthesis, R^{e} as the C₁-C₆ alkyl group is preferably methyl.

The ratio of the R^{e}₂HSiO_{1/2} unit to the SiO_{4/2} unit in (B1) is preferably from 1.5 to 2.2 mol, more preferably from 1.8 to 2.1 mol of the R^{e}₂HSiO_{1/2} unit based on 1 mol of the SiO_{4/2} unit. Typically preferred is one wherein from three to five SiO_{4/2} units form the cyclic siloxane skeleton and two R^{e}₂HSiO_{1/2} units are bonded to each SiO_{4/2} unit, such as [R^{e}₂HSiO_{1/2}]₈[SiO_{4/2}]₄ or [R^{e}₂HSiO_{1/2}]₁₀[SiO_{4/2}]₅. Particularly preferred is one wherein two (CH₃)₂HSiO_{1/2} units are bonded to each SiO_{4/2} unit.

The viscosity of (B1) is preferably from 1 to 100 cP, and more preferably from 1 to 50 cP.

When the molecules of (B) are linear, it is the linear polyorganohydrogensiloxane in which each end is independently terminated with a R₃SiO_{1/2} unit and intermediate units consist of a R₂SiO_{2/2} unit, wherein each R is a hydrogen atom, a C₁-C₆ alkyl group (for example, methyl, ethyl, propyl, butyl, pentyl or hexyl, and preferably methyl) or a phenyl group, and at least two of Rs are hydrogen atom, and the viscosity at 23°C is from 1 to 10,000 cP (preferably from 1 to 5,000 cP, and more preferably from 1 to 1,000 cP. The hydrogen atom(s) bonded to a silicon atom may be present at an end(s) or in the intermediate unit(s).

Examples of such components include:
(B2) a linear polyorganohydrogensiloxane in which each end is terminated with a R^{d}₃SiO_{1/2} unit and intermediate units consists of a R^{c}R^{d}SiO_{2/2} unit and a R^{d}₂SiO_{2/2} unit, wherein R^{c} is a hydrogen atom, and each R^{d} is independently a C₁-C₆ alkyl group (for example, methyl, ethyl, propyl, butyl, pentyl or hexyl, and preferably methyl) or a phenyl group, and the viscosity at 23°C is from 1 to 10,000 cP (preferably from 1 to 5,000 cP, and more preferably from 1 to 1,000 cP);
(B3) a linear polyorganohydrogensiloxane represented by the formula (III): 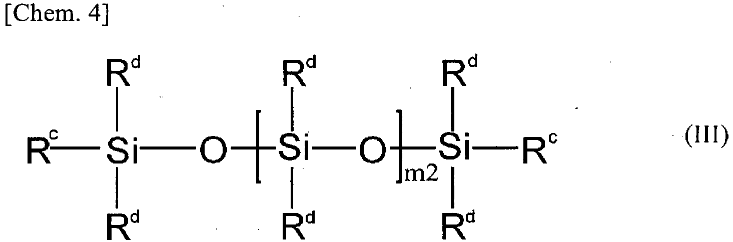 wherein
   each R^{c} is a hydrogen atom,
   each R^{a} is independently a C₁-C₆ alkyl group (for example, methyl, ethyl, propyl, butyl, pentyl or hexyl, and preferably methyl) or a phenyl group, and
   m2 is a number that yields a viscosity of (B3) at 23°C of from 1 to 10,000 cP (preferably from 1 to 5,000 cP, and more preferably from 1 to 1,000 cP)); and
(B4) a linear polyorganohydrogensiloxane in which each end is terminated with a R^{c}R^{d}₂SiO_{1/2} unit and intermediate units consist of a R^{c}R^{d}SiO_{2/2} unit and a R^{d}₂SiO_{2/2} unit, wherein each R^{c} is a hydrogen atom, and each R^{d} is independently a C₁-C₆ alkyl group (for example, methyl, ethyl, propyl, butyl, pentyl or hexyl, and preferably methyl) or a phenyl group, and the viscosity at 23°C is from 1 to 10,000 cP (preferably from 1 to 5,000 cP, and more preferably from 1 to 1,000 cP).

(B2) is the polyorganohydrogensiloxanes in which each end is terminated with a R^{d}₃SiO_{1/2} unit and intermediate units consists of a R^{c}R^{d}SiO_{2/2} unit and a R^{d}₂SiO_{2/2} unit. The number of R^{c} in (B2) is preferably from 2 to 5,000, more preferably from 3 to 5,000, and still more preferably from 20 to 1,000. To facilitate synthesis and to obtain an excellent balance in properties such as mechanical strength and fluidity before curing, R^{d} in (B2) is preferably methyl group.

The ratio of the R^{c}R^{d}SiO_{2/2} units and the R^{d}₂SiO_{2/2} units in (B2) is preferably from 0.1 to 2.0 mol, more preferably from 0.5 to 1.5 mol of the R^{c}R_{d}SiO_{2/2} units based on 1 mol of the R^{d}₂SiO_{2/2} units. Thus, preferred (B2) is a polymethylhydrogensiloxane in which each end is terminated with a trimethylsiloxane unit, the intermediate units consist of a dimethylsiloxane unit and a methylhydrogensiloxane unit, and the ratio of the methylhydrogensiloxane units is from 0.1 to 2.0 mol of the methylhydrogensiloxane units based on 1 mol of the dimethylsiloxane units.

The viscosity of (B2) is from 1 to 10,000 cP, more preferably from 1 to 5,000 cP, and still more preferably from 1 to 1,000 cP.

(B3) the linear polyorganohydrogensiloxane is represented by the formula (III).

To facilitate synthesis and to obtain an excellent balance in properties such as mechanical strength and fluidity before curing, R^{d} in (B3) is preferably methyl groups.

Preferred (B3) is a polymethylhydrogensiloxane in which each end is terminated with a dimethylhydrogensiloxane unit, and the intermediate units consist of a dimethylsiloxane unit.

The viscosity of (B3) is from 1 to 10,000 cP, more preferably from 1 to 5,000 cP, and still more preferably from 1 to 1,000 cP.

(B4) is the polyorganohydrogensiloxane in which in which each end is terminated with a R^{c}R^{d}₂SiO_{1/2} unit and intermediate units consist of a R^{c}R^{d}SiO_{2/2} unit and a R^{d}₂SiO_{2/2} unit. The number of R^{c} in (B4) is preferably from 2 to 5,000, more preferably from 3 to 5,000, and still more preferably from 3 to 1,000. To facilitate synthesis and to obtain an excellent balance in properties such as mechanical strength and fluidity before curing, R^{d} in (B4) is preferably methyl group.

The ratio of the R^{c}R^{d}SiO_{2/2} units and the R^{d}₂SiO_{2/2} units in (B4) is preferably from 0.1 to 2.0 mol, more preferably from 0.5 to 1.5 mol of the R^{c}R^{d}SiO_{2/2} units based on 1 mol of the R^{d}₂SiO_{2/2} units. Thus, preferred component (B4) is a polymethylhydrogensiloxane in which each end is terminated with a dimethylhydrogensiloxane unit, the intermediate units consist of a dimethylsiloxane unit and a methylhydrogensiloxane unit, and the molar ratio of the methylhydrogensiloxane units is from 0.1 to 2.0 mol of the methylhydrogensiloxane units based on 1 mol of the dimethylsiloxane units.

The viscosity of (B4) is from 1 to 10,000 cP, more preferably from 1 to 5,000 cP, and still more preferably from 1 to 1,000 cP.

(B) may be a branched polyorganohydrogensiloxane. Examples thereof include a polyalkylhydrogensiloxane consisting of a R₂HSiO_{1/2} unit, wherein each R is a hydrogen atom, a C₁-C₆ alkyl group (for example, methyl, ethyl, propyl, butyl, pentyl or hexyl, and preferably methyl) or a phenyl group, and a SiO_{4/2} unit, and having three or more hydrogen atoms bonded to a silicon atom in the molecule; and a polyalkylhydrogensiloxane consisting of a R₃SiO_{1/2} unit, a R₂SiO unit and a RSiO_{3/2} unit, wherein each R is a hydrogen atom, a C₁-C₆ alkyl group (for example, methyl, ethyl, propyl, butyl, pentyl or hexyl, and preferably methyl) or a phenyl group, and having two or more hydrogen atoms bonded to a silicon atom in the molecule. The viscosity of the branched polyorganohydrogensiloxane at 23°C is from 1 to 10,000 cP, more preferably from 1 to 5,000 cP, and still more preferably from 1 to 1,000 cP.

(B) may be used alone, or in combination of two or more members. (B1), (B2), (B3) and (B4) may be used alone or may be used in any combination. To increase curability, the use of (B1) is preferable. As (B), the combination of (B1) and (B3), the combination of (B1) and (B4), or the combination of (B3) and (B4) is preferable. From the viewpoint of the impact resistance of cured products, the amount of (B3) is preferably from 10 to 1000 parts by weight, and more preferably from 20 to 800 parts by weight based on 100 parts by weight of the total of (B1) and (B2).

To ensure an appropriate curing rate, the ratio (H_{B}/Vi_{A}) is from 0.5 to 10, and preferably from 1.0 to 6.0 wherein H_{B} is the total number of the hydrogen atom bonded to silicon atom in (B), and Vi_{A} is the total number of the alkenyl group bonded to silicon atom in (A).

(C) comprised in the present composition is a catalyst that accelerates the addition reaction between the alkenyl groups in (A) and the Si-H groups in (B). From the viewpoint of good catalytic activity, a compound of platinum group metal such as platinum, rhodium and palladium is suitably used. Preferred catalyst is platinum compound such as chloroplatinic acid, reaction products of chloroplatinic acid with alcohol, platinum-olefin complex, platinum-vinylsiloxane complex, platinum-ketone complex and platinum-phosphine complex, rhodium compound such as rhodium-phosphine complex and rhodium-sulfide complex, and palladium compound such as palladium-phosphine complex. Platinum compound is more preferable, and platinum-vinylsiloxane complex is still more preferable.

To ensure an appropriate curing rate, the amount of (C) in terms of the platinum group metal is from 0.5 to 2000 ppm, preferably from 1 to 500 ppm by weight, more preferably from 5 to 200 ppm by weight, and still more preferably from 20 to 100 ppm by weight based on the total of the components (A) to (C). To ensure the transparency of cured products, the amount in terms of the platinum group metal is preferably from 0.5 to 200 ppm by weight, more preferably from 1 to 100 ppm by weight, and still more preferably from 2 to 50 ppm by weight.

In the composition of the present invention, an additive such as (D) a nitrogen-containing stabilizer, (E) a diluent, (F) an adhesion imparting agent and (G) an inorganic filler may be formulated within the range which does not impair the effects of the present invention.

The present composition may contain (D) a nitrogen-containing stabilizer. (D) may stabilize (C) the platinum group catalyst. Example of (D) the stabilizer includes an amine compound represented by the general formula (R¹)₂N-R³-N(R²)₂, wherein each R¹ is independently a C₁-C₆ alkyl group (for example, methyl, ethyl, propyl, butyl, pentyl or hexyl), R² has the same meaning as R¹ or are hydrogen atom, and R³ is a C₂-C₄ alkylene group (for example, ethylene, trimethylene or tetramethylene).

Specific examples of (D) the stabilizer include N,N,N',N'-tetramethylethylenediamine, N,N-dimethylethylenediamine, N,N-diethylethylenediamine, N,N-dibutylethylenediamine, N,N-dibutyl-1,3-propanediamine, N,N-dimethyl-1,3-propanediamine, N,N,N',N'-tetraethylethylenediamine and N,N-dibutyl-1,4-butanediamine, with N,N,N',N'-tetramethylethylenediamine being preferable. (D) may be used alone, or in combination of two or more.

The amount of (D) is in the range of from 0.001 to 0.5 mol, and preferably from 0.01 to 0.1 mol based on 1 mol of the platinum group metal in (C). This range ensures that the catalyst is prevented from a deterioration in appearance with time and thus discoloration is suppressed, and also ensures that curing is accomplished in a desired time without a marked decrease in the catalytic activity of the platinum catalyst.

The present composition may contain (E) the diluent in order to adjust the viscosity. A preferred (E) diluent is a silicone oil having no alkenyl groups or hydrosilyl groups which may be involved in the curing reaction, specifically, a polymethylsiloxane in which each end is terminated with a trimethylsiloxane unit and intermediate units consist of a dimethylsiloxane unit. The viscosity of (E) at 23°C is preferably from 1 to 1,000 cP, and more preferably from 5 to 300 cP. The amount of (E) is preferably not more than 50 wt%, more preferably not more than 30 wt%, and still more preferably not more than 20 wt% of the components (the first component and the second component) of the present composition.

The present composition may contain (F) the adhesion imparting agent. Examples of (F) the adhesion imparting agent include alkoxysilanes, for example, a reaction product between 1,1,3,5,7-pentamethylcyclotetrasiloxane and 3-methacryloxypropyltrimethoxysilane.

Specifically, alkoxysilanes having side chains represented by the formula below are preferable. 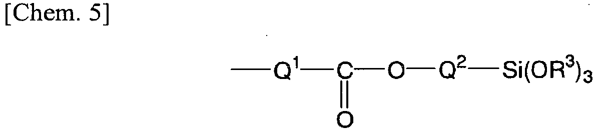 wherein Q¹ and Q² are each independently an alkylene group, preferably a C₁-C₄ alkylene group, and each R³ is a C₁-C₄ alkyl group.

Examples of such alkoxysilanes include the following compounds.

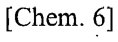

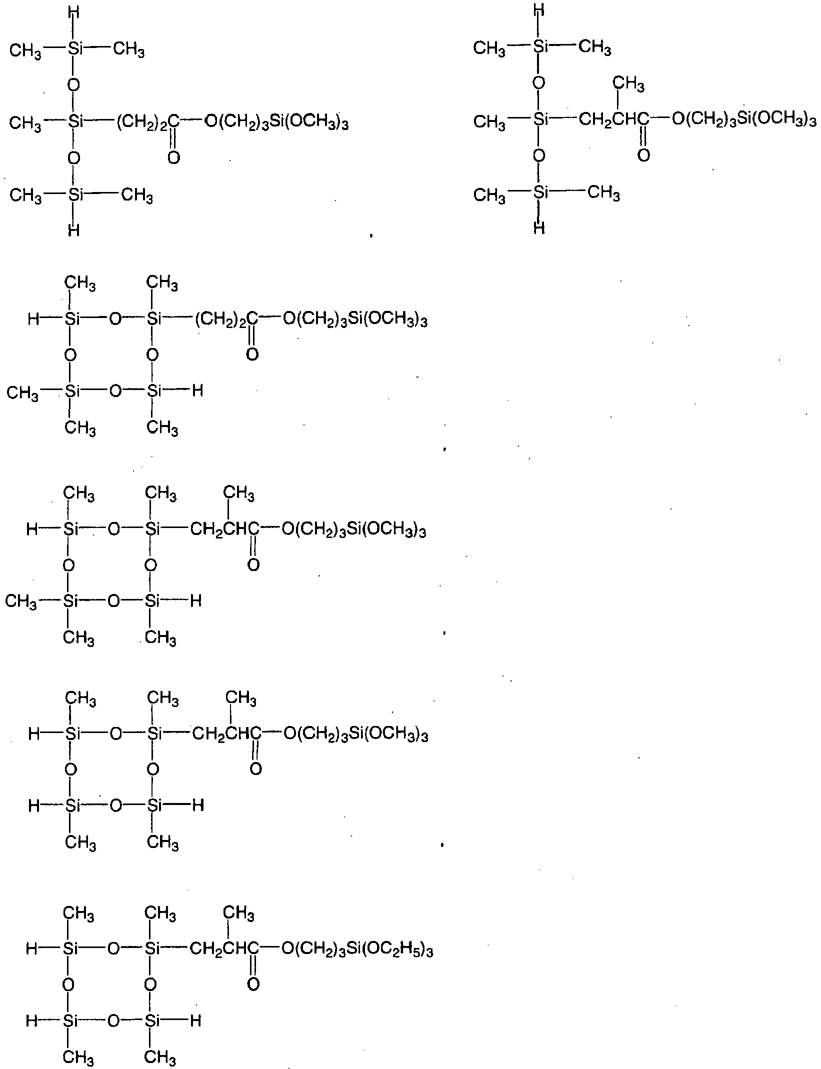

The present composition may contain (G) an inorganic filler. Examples of (G) the inorganic filler include dry fine powdery silica such as fumed silica and arc silica, with fumed silica being preferable. The surface of the silica may be treated with agent, for example, a silazane compound such as hexamethyldisilazane and 1,3-divinyl-1,1,3,3-tetramethyldisilazane; and a polyorganosiloxane such as octamethylcyclotetrasiloxane.

The present composition consists of the first component and the second component. The first component comprises (A) and (C), and the second component comprises (B). The first component does not comprise (B), and the second component does not comprise (C). The second component may comprise (A). In the invention, the components present in the first component and the second component are brought into contact together for the first time when substrates are joined to each other, and the crosslinking reaction thus proceeds.

From the viewpoint of the stabilization of the component (C), it is preferable that the first component further include (D). It is more preferable that the first component further include (D) and (E).

The first component preferably has a viscosity at 23°C of from 100 to 100,000 cP, more preferably from 100 to 10,000 cP, and particularly preferably from 300 to 4,000 cP. With the viscosity being in this range, the first component is improved in workability and exhibits good spreadability during application. Further, the above viscosity ensures that the components present in the first component and the second component are easily mixed together when substrates are joined to each other, and consequently the reactivity is improved and the curing time is further reduced. The first component preferably includes (A) having large polyorganosiloxane molecular chains, namely, having a high viscosity because the addition reaction between such (A) and (B) may form a large crosslinked structure with a small number of reaction points and consequently the curing time may be further reduced. In order to obtain such a first component, it is preferable that the first component include a mixture of a polyorganosiloxane having a high viscosity (for example, a viscosity at 23°C of from 30,000 to 100,000 cP) and a polyorganosiloxane having a low viscosity (for example, a viscosity at 23°C of from 50 to 1,000 cP) as (A), or the first component include a polyorganosiloxane having a high viscosity (for example, a viscosity at 23°C of from 30,000 to 100,000 cP) as (A) and (E) the diluent. In the mixture of a high-viscosity polyorganosiloxane and a low-viscosity polyorganosiloxane, the amount of the low-viscosity polyorganosiloxane is not particularly limited as long as the above viscosity is satisfied, and may be, for example, from 30 to 60 parts by weight based on 30 parts by weight of the high-viscosity polyorganosiloxane.

It is preferable that the second component further include (A), and more preferably (A) and (E). To obtain uniform properties of cured products, (A) present in the first component and (A) present in the second component are preferably the same, and (E) present in the first component and (E) present in the second component are preferably the same.

When the second component includes (A), the ratio of the contents of (A) in the first component and the second component is not particularly limited as long as the present composition satisfies the H_{B}/Vi_{A} ratio. For example, the amount of (A) in the second component may be from 10 to 1000 parts by weight, preferably from 20 to 500 parts by weight, more preferably from 50 to 200 parts by weight, and still more preferably from 80 to 120 by weight based on 100 parts by weight of (A) in the first component.

The second component preferably has a viscosity at 23°C of from 100 to 100,000 cP, more preferably from 100 to 10,000 cP, and particularly preferably from 300 to 4,000 cP. With the viscosity being in this range, the second component is improved in workability and exhibits good spreadability during application. Further, the above viscosity ensures that the components present in the first component and the second component are easily mixed together when substrates are joined to each other, and consequently the reactivity is improved and the curing time is further reduced. The second component preferably includes (A) having large polyorganosiloxane molecular chains, namely, having a high viscosity because the addition reaction between such (A) and (B) may form a large crosslinked structure with a small number of reaction points and consequently the curing time may be further reduced. In order to obtain such a second component, it is preferable that the second component include (B) and a mixture of (A) including a polyorganosiloxane having a high viscosity (for example, a viscosity at 23°C of from 30,000 to 100,000 cP) and a polyorganosiloxane having a low viscosity (for example, a viscosity at 23°C of from 50 to 1,000 cP), or the second component include (B), a polyorganosiloxane having a high viscosity (for example, a viscosity at 23°C of from 30,000 to 100,000 cP) as (A), and (E) the diluent. In the mixture of a high-viscosity polyorganosiloxane and a low-viscosity polyorganosiloxane, the amount of the low-viscosity polyorganosiloxane is not particularly limited as long as the above viscosity is satisfied, and may be, for example, from 30 to 60 parts by weight based on 30 parts by weight of the high-viscosity polyorganosiloxane.

The first component may be prepared by homogeneously kneading (A) and (C) and optionally additional components with a mixing apparatus such as a universal kneading machine or a kneader. The second component may be prepared from (B) and optionally additional components in a similar manner to the first component.

In the present composition, the first component and the second component are cured at room temperature (for example, from 20 to 25°C) after being brought into contact with each other, thus producing an adhesion power. That is, the present composition is used in such a manner that the first component and the second component are stored in respective containers and are brought into contact with each other at an appropriate time to effect curing. After the contact between the first component and the second component, the composition is cured in from 0.1 to 30 minutes to produce adhesion. The curing time is preferably from 0.1 to 20 minutes, and more preferably from 0.1 to 10 minutes. After the curing, heating may be performed as required at a temperature of from 50 to 80°C to further promote the curing and to further increase the adhesion. The heating time may be selected appropriately, and may be, for example, from 0.1 to 3 hours.

By the contact and curing of the first component and the second component, the present composition may form cured products having a transmittance of from 70 to 100%, preferably from 80 to 100%, and more preferably from 90 to 100%. In the bonding of a base unit having an image display section of an image display device with a light transmissive protective unit, the use of the present composition is advantageous in that high transmittance is obtained and good viewability is achieved.

The present composition may be used as an adhesive to bond various substrates. Specifically, the present composition may be used as an adhesive for adhering two substrates by the steps comprising: applying the first component to an adhering surface of one of the two substrates, applying the second component to a adhering surface of the other of the two substrates that is the first component has not been applied, and joining the applied substrates together and curing the components to bond the substrates to each other. The present composition is preferably used as an adhesive for bonding a base unit of an image display section in an image display device such as a cathode-ray tube display, a liquid crystal display, a plasma display or an organic EL display, with a light transmissive protective unit.

A method for producing an adhered article comprising two substrates using the two-pack curable polyorganosiloxane composition of the present invention consisting of the first component and the second component comprises: applying the first component to an adhering surface of one of the two substrates, applying the second component to an adhering surface of the other substrate that the first component has not been applied, and joining the applied substrates together and curing the components to bond the substrates to each other.

Examples of the substrates include a metal such as aluminum, iron, zinc, copper and magnesium alloy, a plastic such as epoxy resins, acrylic resins, ABS, PA, PBT, PC, PPS and SPS, and a glass. Preferred substrates are a base unit of an image display section in an image display device such as a cathode-ray tube display, a liquid crystal display, a plasma display or an organic EL display, and a light transmissive protective unit.

The amounts in which the first component and the second component are applied to the substrates are preferably such that the amount of the second component is from 0.1 to 100,000 parts by weight, more preferably from 0.2 to 50,000 parts by weight, still more preferably from 1 to 10,000 parts by weight, and particularly preferably from 1 to 5,000 parts by weight based on 100 parts by weight of the first component. To obtain a short temporary fixing time, the above amount is preferably from 10 to 2000 parts by weight, and more preferably from 90 to 1200 parts by weight.

From the viewpoint of a short temporary fixing time, the first component and the second component may be used in such amounts that the first component: second component weight ratio is from 1:1,000 to 1,000:1, preferably from 1:500 to 500:1, more preferably from 1:200 to 200:1, still more preferably from 1:20 to 20:1, and particularly preferably from 1:8 to 8:1.

The first component and the second component are each applied in a thickness of from 1 to 1,000 µm. From the viewpoint of a short temporary fixing time, the thickness is more preferably from 1 to 500 µm, and still more preferably from 1 to 200 µm. From the viewpoint of workability, the thickness is preferably from 10 to 500 µm, and more preferably from 20 to 200 µm. The ratio of the thickness of the first component applied to the thickness of the second component applied maybe from 1:1,000 to 1,000:1, preferably from 1:500 to 500:1, more preferably from 1:200 to 200:1, still more preferably from 1:20 to 20:1, and particularly preferably from 1:8 to 8:1.

From the viewpoint of transparency, the total thickness of the first component and the second component applied is preferably from 2 to 2000 µm, and more preferably from 2 to 1000 µm.

The components may be applied to the substrates by any methods without limitation as long as the agents may be accurately applied to the target positions on the adhering surfaces and the composition may be charged over the entirety of the adherends. Exemplary methods include dispenser coating and slot die coating.

The substrates may be joined together by any methods without limitation. For example, they may be joined together in vacuum or under atmospheric pressure.

In the production method of the present invention, the method may further comprise: optionally heating the bonded substrates at a temperature of 50 to 80°C after the step of joining the applied substrates together and curing the components to bond the substrates to each other. Such heating further promotes the curing and further increases the adhesion power.

In the production method of the present invention, an adhered article may be produced by using the two-pack curable polyorganosiloxane composition of the present invention at portions of the adhering surfaces while an adhesive having a different constituent from the composition (for example, a low-reactivity adhesive composed of a one-pack polyorganosiloxane composition) is used at the remaining portions. In order to obtain uniform properties of cured products such as optical characteristics and adhesion, the adhesive with a different constituent from the present composition preferably comprises an alkenyl group-containing polyorganosiloxane and a polyorganohydrogensiloxane which are the same as (A) the alkenyl group-containing polyorganosiloxane and(B) the polyorganohydrogensiloxane in two-pack curable polyorganosiloxane composition of the present invention, respectively.

Thus, a preferred embodiment of the inventive method for producing an adhered article comprising two substrates is a method for producing an image display device comprising a base unit having an image display section, and a light transmissive protective unit, the base unit and the light transmissive protective being adhered to each other by the two-pack curable polyorganosiloxane composition according to claim 1, the method comprising: applying the first component or the second component to an adhering surface of the base unit of the image display section of the image display device, applying the second component or the first component wherein in the component other than the component applied to the adhering surface of the base unit of the image display section of the image display device to an adhering surface of the light transmissive protective unit, and joining the applied base unit of the image display section of the image display device together with the applied light transmissive protective unit, and curing the components to bond the units to each other. Here, a difference in height may be necessarily disposed in an outer peripheral portion of the base unit of the image display section to prevent the flowing out of the composition.

Specific examples of the image display device produced by the composition or the production method of the present invention include large (from 50 to 100 inches) image display device such as a plasma panel display, and small (from 1 to less than 50 inches) image display device such as a mobile phone. These image display devices may comprise a touch sensor.

### EXAMPLES

Hereinbelow, the present invention will be described in further detail by presenting Examples and Comparative Examples without limiting the scope of the invention to such Examples.

With the formulations described in Tables 1 to 6, components were kneaded by hand to give two-pack compositions comprising first and second components in Examples and Comparative Examples.

The following components were used.
A1: polymethylvinylsiloxane in which each end is terminated a dimethylvinylsiloxane unit and intermediate units consist of a dimethylsiloxane unit (viscosity at 23°C: 82,000 cP)
A2: polymethylvinylsiloxane in which each end is terminated with a dimethylvinylsiloxane unit and intermediate units consist of a dimethylsiloxane unit (viscosity at 23°C: 420 cP)
A3: polymethylvinylsiloxane in which each end is terminated with a dimethylvinylsiloxane unit and intermediate units consist of a dimethylsiloxane unit (viscosity at 23°C: 110 cP)
B1: average unit formula [H(CH₃)₂SiO_{1/2}]₈[SiO_{4/2}]₄ (hydrogen content 1.05 wt%)
B2: polymethylhydrogensiloxane in which each end is terminated with a trimethylsiloxane unit and intermediate units consist of a dimethylsiloxane unit and a methylhydrogensiloxane unit (structural formula:

   [(CH₃)₃SiO_{1/2}][H(CH₃)SiO_{2/2}]₅₅[(CH₃)₂SiO_{2/2}]₅₅[(CH₃)₃SiO_{1/2}], viscosity at 23°C: 100 cP)
B3: polymethylhydrogensiloxane in which each end is terminated with a dimethylhydrogensiloxane unit and intermediate units consist of a dimethylsiloxane unit (viscosity at 23°C: 20 cP)
B4: polymethylhydrogensiloxane in which each end is terminated with a dimethylhydrogensiloxane unit and intermediate units consist of a dimethylsiloxane unit and a methylhydrogensiloxane unit (structural formula:

   [H(CH₃)₂SiO_{1/2}][H(CH₃)SiO_{2/2}]₉[(CH₃)₂SiO_{2/2}]₁₁[H(CH₃)₂SiO_{1/2}], viscosity at 23°C: 10 cP)
C: a complex obtained by heating chloroplatinic acid and 1,3-divinyl-1,1,3,3-tetramethyldisiloxane in a molar ratio of 1:4 and having a platinum content of 4.91 wt%.
D: N,N,N',N'-tetramethylethylenediamine
E: polymethylsiloxane in which each end is terminated with a trimethylsiloxane unit and intermediate units consist of a dimethylsiloxane unit (viscosity at 23°C: 100 cP)

Properties were evaluated in the following manner. The results are described in Tables 1 to 6.

### (1) Viscosity

The viscosity at 23°C was measured with a rotational viscometer (Vismetron VDA-L) (manufactured by Shibaura System).

### (2) Temporary fixing time

The first component was applied with a diameter of 2 cm and in a prescribed thickness of the first component to the center of a first glass plate (5 cm x 5 cm x 5 mm in thickness), and the second component was applied with a diameter of 2 cm and in a prescribed thickness of the second component to the center of a second glass plate (7.6 cm x 7.6 cm x 1 mm in thickness) so that the joining of the two glass plates would produce a composition having a diameter of 2 cm and a prescribed total thickness of the first component and the second component applied. At room temperature (25°C), the second glass was placed on the first glass, and the joined glass plates were held vertically at 90 degrees every 15 seconds. The time was measured until the first glass became free from misalignment due to its weight, thereby determining the temporary fixing time.

### (3) Yellow index

The first component was applied with a diameter of 2 cm and in a prescribed thickness of the first component to the center of a first glass plate (5 cm x 5 cm x 5 mm in thickness), and the second component was applied with a diameter of 2 cm and in a prescribed thickness of the second component to the center of a second glass plate (7.6 cm x 7.6 cm x 1 mm in thickness) so that a composition of Example or Comparative Example would have a prescribed total thickness of the first component and the second component applied. At room temperature (25°C), the second glass was placed on the first glass. The composition was then cured at room temperature for 30 minutes and at 70°C for 30 minutes. After the sample was brought back to 23°C, the yellow index, an indicator of the degree of discoloration, was measured with a spectrophotometer (CM-3500d manufactured by Minolta Co., Ltd.).

### (4) Transmittance

The first component was applied with a diameter of 2 cm and in a prescribed thickness of the first component to the center of a first glass plate (5 cm x 5 cm x 5 mm in thickness), and the second component was applied with a diameter of 2 cm and in a prescribed thickness of the second component to the center of a second glass plate (7.6 cm x 7.6 cm x 1 mm in thickness) so that a composition of Example or Comparative Example would have a prescribed total thickness of the first component and the second component applied. At room temperature (25°C), the second glass was placed on the first glass. The composition was then cured at room temperature for 30 minutes and at 70°C for 30 minutes. After the sample was brought back to 23°C, the transmittance, an indicator of the degree of transparency, was measured with a spectrophotometer (CM-3500d manufactured by Minolta Co., Ltd.).

**[Table 1]**

| | | | Example 1 | Example 2 | Example 3 | Example 4 | Example 5 |
|---|---|---|---|---|---|---|---|
| First component | A1 | Parts by weight | 99.8 | | | 99.592 | |
| | A2 | Parts by weight | | 99.918 | | | 99.918 |
| | A3 | Parts by weight | | | 99.918 | | |
| | C | Parts by weight | 0.02 | 0.082 | 0.082 | 0.408 | 0.082 |
| | D | Parts by weight | | | | | |
| | E | Parts by weight | | | | | |
| | Total | Parts by weight | 99.82 | 100 | 100 | | 100 |
| | Viscosity | [cP] | 82000 | 420 | 110 | 80000 | 420 |
| Second component | A1 | Parts by weight | 98.86 | | | 98.63 | |
| | A2 | Parts by weight | | 93.4 | | | 87 |
| | A3 | Parts by weight | | | 84 | | |
| | B1 | Parts by weight | 1.14 | 6.6 | 16 | 1.37 | 13 |
| | B2 | Parts by weight | | | | | |
| | B3 | Parts by weight | | | | | |
| | E | Parts by weight | | | | | |
| | Total | Parts by weight | 100 | 100 | 100 | 100 | 100 |
| | Viscosity | [cP] | 74000 | 370 | 100 | 73000 | 280 |
| Total of first component and second component | Content of component C in terms of a plutinum group metal (ppm) | | 5 | 20 | 20 | 100 | 20 |
| | H_{B}/Vi_{A} | | 2 | 2 | 2 | 2 | 4 |
| | H_{B} | | 11.97 | 69.3 | 168 | 14.39 | 136.5 |
| | Vi_{A} | | 6.02 | 35.04 | 82.79 | 7.18 | 33.89 |
| Thickness of first component applied (µm) | | | 100 | 100 | 100 | 100 | 100 |
| Thickness of second component applied (µm) | | | 100 | 100 | 100 | 100 | 100 |
| Properties | Temporary fixing time [min] | | 8 | 4 | 2 | 2.5 | 2.5 |
| | Yellow index | | 0.2 | 0.28 | 0.35 | 1.9 | 0.39 |
| | Transmittance [%] 400 nm | | 99 | 98 | 98 | 94 | 98 |

| | | | | | | | |
|---|---|---|---|---|---|---|---|
| *ViA: Total of vinyl groups bonded to silicon atoms in A1 to A3. *HB: Total of hydrogen atoms bonded to silicon atoms in B1 to B3. | | | | | | | |

**[Table 2]**

| | | | Example 6 | Example 7 | Example 8 | Example 9 | Example 10 |
|---|---|---|---|---|---|---|---|
| First component | A1 | Parts by weight | | | | | 30 |
| | A2 | Parts by weight | 95.93 | 99.918 | 99.918 | 99.918 | 49.918 |
| | A3 | Parts by weight | | | | | |
| | C | Parts by weight | 4.07 | 0.082 | 0.082 | 0.082 | 0.082 |
| | D | Parts by weight | | | | | |
| | E | Parts by weight | | | | | 20 |
| | Total | Parts by weight | 100 | 100 | 100 | 100 | 100 |
| | Viscosity | [cP] | 370 | 420 | 420 | 420 | 3400 |
| Second component | A1 | Parts by weight | | | | | 30 |
| | A2 | Parts by weight | 91.4 | 91.5 | 68.6 | 84.5 | 42.86 |
| | A3 | Parts by weight | | | | | |
| | B1 | Parts by weight | 8.6 | | 3 | 1.5 | 7.14 |
| | B2 | Parts by weight | | 8.5 | | | |
| | B3 | Parts by weight | | | 24.7 | 14 | |
| | E | Parts by weight | | | | | 20 |
| | Total | Parts by weight | 100 | 100 | 96.3 | 100 | 100 |
| | Viscosity | [cP] | 360 | 390 | 160 | 260 | 3200 |
| Total of first component and second component | Content of component C in terms of a plutinum group metal (ppm) | | 999 | 20 | 20 | 20 | 20 |
| | H_{B}/Vi_{A} | | 2 | 2 | 2 | 1 | 4 |
| | H_{B} | | 90.3 | 70.55 | 62.13 | 33.11 | 74.97 |
| | Vi_{A} | | 45.97 | 34.7 | 30.58 | 33.44 | 18.75 |
| Thickness of first component applied (µm) | | | 100 | 100 | 100 | 100 | 100 |
| Thickness of second component applied (µm) | | | 100 | 100 | 100 | 100 | 100 |
| Properties | Temporary fixing time [min] | | 1.5 | 4 | 4 | 6 | 1.5 |
| | Yellow index | | 12.2 | 0.38 | 0.4 | 0.35 | 0.3 |
| | Transmittance [%] 400 nm | | 71 | 98 | 98 | 98 | 98 |

| | | | | | | | |
|---|---|---|---|---|---|---|---|
| *ViA: Total of vinyl groups bonded to silicon atoms in A1 to A3. *HB: Total of hydrogen atoms bonded to silicon atoms in B1 to B3. | | | | | | | |

**[Table 3]**

| | | | Example 11 | Example 12 | Example 13 | Example 14 |
|---|---|---|---|---|---|---|
| First component | A1 | Parts by weight | 30 | | 99.592 | 99.592 |
| | A2 | Parts by weight | 49.91788 | 99.918 | | |
| | A3 | Parts by weight | | | | |
| | C | Parts by weight | 0.082 | 0.002 | 0.408 | 0.408 |
| | D | Parts by weight | 0.00012 | | | |
| | E | Parts by weight | 20 | | | |
| | Total | Parts by weight | 100 | 99.92 | 100 | 100 |
| | Viscosity | [cP] | 3400 | 420 | 80000 | 80000 |
| Second component | A1 | Parts by weight | 30 | | 99.66 | 93.3 |
| | A2 | Parts by weight | 42.86 | 87 | | |
| | A3 | Parts by weight | | | | |
| | B1 | Parts by weight | 7.14 | 13 | 0.34 | 6.7 |
| | B2 | Parts by weight | | | | |
| | B3 | Parts by weight | | | | |
| | E | Parts by weight | 20 | | | |
| | Total | Parts by weight | 100 | 100 | 100 | 100 |
| | Viscosity | [cP] | 3200 | 280 | 80000 | 50000 |
| Total of first component and second component | Content of component C in terms of a plutinum group metal (ppm) | | 20 | 0.5 | 100 | 100 |
| | H_{B}/Vi_{A} | | 4 | 4.1 | 0.5 | 10 |
| | H_{B} | | 74.97 | 136.5 | 3.57 | 70.35 |
| | Vi_{A} | | 18.75 | 33.65 | 7.21 | 7.02 |
| Thickness of first component applied (µm) | | | 100 | 100 | 100 | 100 |
| Thickness of second component applied (µm) | | | 100 | 100 | 100 | 100 |
| Properties | Temporary fixing time [min] | | 1.5 | 10 | 10 | 10 |
| | Yellow index | | 0.15 | 0.39 | 1.5 | 2 |
| | Transmittance [%] 400 nm | | 98 | 98 | 95 | 93 |

| | | | | | | |
|---|---|---|---|---|---|---|
| *ViA: Total of vinyl groups bonded to silicon atoms in A1 to A3. *HB: Total of hydrogen atoms bonded to silicon atoms in B1 to B3. | | | | | | |

**[Table 4]**

| | | | Comparative example 1 | Comparative example 2 | Comparative example 3 |
|---|---|---|---|---|---|
| First component | A1 | Parts by weight | | | |
| | A2 | Parts by weight | 99.9998 | 99.918 | 99.918 |
| | A3 | Parts by weight | | | |
| | C | Parts by weight | 0.0002 | 0.082 | 0.082 |
| | D | Parts by weight | | | |
| | E | Parts by weight | | | |
| | Total | Parts by weight | 100 | 100 | 100 |
| | Viscosity | [cP] | 420 | 420 | 420 |
| Second component | A1 | Parts by weight | | | |
| | A2 | Parts by weight | 93.4 | 99.4 | 58.8 |
| | A3 | Parts by weight | | | |
| | B1 | Parts by weight | 6.6 | 0.6 | 41.2 |
| | B2 | Parts by weight | | | |
| | B3 | Parts by weight | | | |
| | E | Parts by weight | | | |
| | Total | Parts by weight | 100 | 100 | 100 |
| | Viscosity | [cP] | 370 | 410 | 130 |
| Total of first component and second component | Content of component C in terms of a plutinum group metal (ppm) | | 0.05 | 20 | 20 |
| | H_{B}/Vi_{A} | | 2 | 0.2 | 15 |
| | H_{B} | | 69.3 | 6.3 | 432.6 |
| | Vi_{A} | | 34.81 | 36.12 | 28.82 |
| Thickness of first component applied (µm) | | | 100 | 100 | 100 |
| Thickness of second component applied (µm) | | | 100 | 100 | 100 |
| Properties | Temporary fixing time [min] | | 30 or more | 30 or more | 30 or more |
| | Yellow index | | 0.16 | Not measured due to uncuring | 0.05 |
| | Transmittance [%] 400 nm | | 99 | Not measured due to uncuring | 97 |

| | | | | | |
|---|---|---|---|---|---|
| *ViA: Total of vinyl groups bonded to silicon atoms in A1 to A3. *HB: Total of hydrogen atoms bonded to silicon atoms in B1 to B3. | | | | | |

**[Table 5]**

| | | | Example 15 | Example 16 | Example 17 | Example 18 | Example 19 |
|---|---|---|---|---|---|---|---|
| First component | A1 | Parts by weight | | 30 | 30 | 44 | 44 |
| | A2 | Parts by weight | 99.918 | 49.918 | 49.918 | 55.918 | 55.918 |
| | A3 | Parts by weight | | | | | |
| | C | Parts by weight | 0.082 | 0.082 | 0.082 | 0.082 | 0.082 |
| | D | Parts by weight | | | | | |
| | E | Parts by weight | | 20 | 20 | | |
| | Total | Parts by weight | 100 | 100 | 100 | 100 | 100 |
| | Viscosity | [cP] | 420 | 3400 | 3400 | 8300 | 8300 |
| Second component | A1 | Parts by weight | | 30 | 30 | 50 | 53 |
| | A2 | Parts by weight | 91.20 | 40.40 | 41.63 | 28.60 | 6.00 |
| | A3 | Parts by weight | | | | | |
| | B1 | Parts by weight | | | 3.57 | | |
| | B2 | Parts by weight | | | | | |
| | B3 | Parts by weight | | | | 14.3 | 40 |
| | B4 | Parts by weight | 8.8 | 9.6 | 4.8 | 7.1 | 1 |
| | E | Parts by weight | | 20 | 20 | | |
| | Total | Parts by weight | 100 | 100 | 100 | 100 | 100 |
| | Viscosity | [cP] | 350 | 3000 | 3100 | 8300 | 7600 |
| Total of first component and second component | Content of component C in terms of a plutinum group metal (ppm) | | 20 | 20 | 20 | 20 | 20 |
| | HB/ViA | | 2.0 | 4.1 | 4.0 | 4.0 | 4.0 |
| | HB | | 68.64 | 74.88 | 74.93 | 73.11 | 57.40 |
| | HB1 | | 0.00 | 0.00 | 37.49 | 0.00 | 0.00 |
| | HB3 | | 0.00 | 0.00 | 0.00 | 17.73 | 49.60 |
| | HB4 | | 68.64 | 74.88 | 37.44 | 55.38 | 7.80 |
| | ViA | | 34.65 | 18.30 | 18.53 | 18.28 | 14.30 |
| Thickness of first component applied (µm) | | | 100 | 100 | 100 | 100 | 100 |
| Thickness of second component applied (µm) | | | 100 | 100 | 100 | 100 | 100 |
| Properties | Temporary fixing time [min] | | 20 | 2.5 | 2 | 2 | 5 |
| | Yellow index | | 0.29 | 0.3 | 0.3 | 0.3 | 0.3 |
| | Transmittance [%] 400 nm | | 98 | 98 | 98 | 98 | 98 |

| | | | | | | | |
|---|---|---|---|---|---|---|---|
| *ViA: Total of vinyl groups bonded to silicon atoms in A1 to A3. *HB: Total of hydrogen atoms bonded to silicon atoms in B1, B3 and B4. *HB1: Total of hydrogen atoms bonded to silicon atoms in B1. *HB3: Total of hydrogen atoms bonded to silicon atoms in B3. *HB4: Total of hydrogen atoms bonded to silicon atoms in B4. | | | | | | | |

**[Table 6]**

| | | | Comparative example 4 | Comparative example 5 |
|---|---|---|---|---|
| First component | A1 | Parts by weight | | |
| | A2 | Parts by weight | 99.918 | 99.918 |
| | A3 | Parts by weight | | |
| | C | Parts by weight | 0.082 | 0.082 |
| | D | Parts by weight | | |
| | E | Parts by weight | | |
| | Total | Parts by weight | 100 | 100 |
| | Viscosity | [cP] | 420 | 420 |
| Second component | A1 | Parts by weight | | |
| | A2 | Parts by weight | 99.19 | 48.00 |
| | A3 | Parts by weight | | |
| | B1 | Parts by weight | | |
| | B2 | Parts by weight | | |
| | B3 | Parts by weight | | |
| | B4 | Parts by weight | 0.81 | 52 |
| | E | Parts by weight | | |
| | Total | Parts by weight | 100 | 100 |
| | Viscosity | [cP] | 410 | 100 |
| Total of first component and second component | Content of component C in terms of a plutinum group metal (ppm) | | 20 | 20 |
| | HB/ViA | | 0.2 | 15.1 |
| | HB | | 6.32 | 405.60 |
| | HB1 | | 0.00 | 0.00 |
| | HB3 | | 0.00 | 0.00 |
| | HB4 | | 6.32 | 405.60 |
| | ViA | | 36.09 | 26.87 |
| Thickness of first component applied (µm) | | | 100 | 100 |
| Thickness of second component applied (µm) | | | 100 | 100 |
| Properties | Temporary fixing time [min] | | 30 or more | 30 or more |
| | Yellow index | | Not measured due to uncuring | 0.05 |
| | Transmittance [%] 400 nm | | Not measured due to uncuring | 97 |

| | | | | |
|---|---|---|---|---|
| *ViA: Total of vinyl groups bonded to silicon atoms in A1 to A3. *HB: Total of hydrogen atoms bonded to silicon atoms in B1, B3 and B4. *HB1: Total of hydrogen atoms bonded to silicon atoms in B1. *HB3: Total of hydrogen atoms bonded to silicon atoms in B3. *HB4: Total of hydrogen atoms bonded to silicon atoms in B4. | | | | |

With the formulations described in Tables 7 to 11, components were kneaded by hand to give two-pack compositions comprising first and second components in Examples and Comparative Examples. In Examples and Comparative Examples below, the first components and the second components included the identical components but were used in different amounts shown in the tables and the thicknesses of the first component and the second component applied were controlled to values described in the tables. Consequently, the two-pack curable polyorganosiloxane compositions formed from the first components and the second components had various different constituents. In Examples and Comparative Examples below, the properties were measured in the same manner as in Example 1. In Examples 20 to 28, the properties were measured by applying the first component and the second component each with a diameter of 2 cm similarly to Example 1. In Examples 29 to 35 and Comparative Examples 6 to 9, the diameters of the first component and the second component applied were 5 cm. The results are described in Tables 7 to 11.

**[Table 7]**

| | | | Example 20 | Example 21 | Example 22 | Example 23 | Example 24 |
|---|---|---|---|---|---|---|---|
| First component | A1 | Parts by weight | 11 | 14.67 | 22.00 | 29.33 | 44.00 |
| | A2 | Parts by weight | 13.9795 | 18.64 | 27.96 | 37.28 | 55.92 |
| | A3 | Parts by weight | | | | | |
| | C | Parts by weight | 0.0205 | 0.03 | 0.04 | 0.05 | 0.08 |
| | D | Parts by weight | | | | | |
| | E | Parts by weight | | | | | |
| | Total | Parts by weight | 25.00 | 33.33 | 50.00 | 66.67 | 100.00 |
| | Viscosity | [cP] | 8700 | 8700 | 8700 | 8700 | 8700 |
| Second component | A1 | Parts by weight | 87.5 | 83.33 | 75.00 | 66.67 | 50.00 |
| | A2 | Parts by weight | 46.2 | 44.00 | 39.60 | 35.20 | 26.40 |
| | A3 | Parts by weight | | | | | |
| | B1 | Parts by weight | 8.05 | 7.67 | 6.90 | 6.13 | 4.60 |
| | B2 | Parts by weight | | | | | |
| | B3 | Parts by weight | 33.25 | 31.67 | 28.50 | 25.33 | 19.00 |
| | B4 | Parts by weight | | | | | |
| | E | Parts by weight | | | | | |
| | Total | Parts by weight | 175.00 | 166.67 | 150.00 | 133.33 | 100.00 |
| | Viscosity | [cP] | 8800 | 8800 | 8800 | 8800 | 8800 |
| Total of first component and second component | Content of component C in terms of a plutinum group metal (ppm) | | 5 | 7 | 10 | 13 | 20 |
| | HB/ViA | | 9.1 | 8.4 | 7.1 | 6.0 | 4.0 |
| | HB | | 125.76 | 119.77 | 107.79 | 95.81 | 71.86 |
| | HB1 | | 84.53 | 80.50 | 72.45 | 64.40 | 48.30 |
| | HB3 | | 41.23 | 39.27 | 35.34 | 31.41 | 23.56 |
| | ViA | | 13.85 | 14.30 | 15.19 | 16.09 | 17.88 |
| Thickness of first component applied (µm) | | | 25 | 33 | 50 | 67 | 100 |
| Thickness of second component applied (µm) | | | 175 | 167 | 150 | 133 | 100 |
| Properties | Temporary fixing time [min] | | 2 | 1.5 | 1.5 | 1.5 | 1.5 |
| | Yellow index | | 0.14 | 0.16 | 0.2 | 0.26 | 0.3 |
| | Transmittance [%] 400 nm | | 99 | 99 | 99 | 98 | 98 |

| | | | | | | | |
|---|---|---|---|---|---|---|---|
| *ViA: Total of vinyl groups bonded to silicon atoms in A1 to A3. *HB: Total of hydrogen atoms bonded to silicon atoms in B1 and B3. *HB1: Total of hydrogen atoms bonded to silicon atoms in B1. *HB3: Total of hydrogen atoms bonded to silicon atoms in B3. | | | | | | | |

**[Table 8]**

| | | | Example 25 | Example 26 | Example 27 | Example 28 |
|---|---|---|---|---|---|---|
| First component | A1 | Parts by weight | 58.67 | 66.00 | 73.33 | 77.00 |
| | A2 | Parts by weight | 74.56 | 83.88 | 93.20 | 97.86 |
| | A3 | Parts by weight | | | | |
| | C | Parts by weight | 0.11 | 0.12 | 0.14 | 0.14 |
| | D | Parts by weight | | | | |
| | E | Parts by weight | | | | |
| | Total | Parts by weight | 133.33 | 150.00 | 166.67 | 175.00 |
| | Viscosity | [cP] | 8700 | 8700 | 8700 | 8700 |
| Second component | A1 | Parts by weight | 33.33 | 25.00 | 16.67 | 12.50 |
| | A2 | Parts by weight | 17.60 | 13.20 | 8.80 | 6.60 |
| | A3 | Parts by weight | | | | |
| | B1 | Parts by weight | 3.07 | 2.30 | 1.53 | 1.15 |
| | B2 | Parts by weight | | | | |
| | B3 | Parts by weight | 12.67 | 9.50 | 6.33 | 4.75 |
| | B4 | Parts by weight | | | | |
| | E | Parts by weight | | | | |
| | Total | Parts by weight | 66.67 | 50.00 | 33.33 | 25.00 |
| | Viscosity | [cP] | 8800 | 8800 | 8800 | 8800 |
| Total of first component and second component | Content of component C in terms of a plutinum group metal (ppm) | | 27 | 30 | 34 | 35 |
| | HB/ViA | | 2.4 | 1.7 | 1.1 | 0.8 |
| | HB | | 47.91 | 35.93 | 23.95 | 17.97 |
| | HB1 | | 32.20 | 24.15 | 16.10 | 12.08 |
| | HB3 | | 15.71 | 11.78 | 7.85 | 5.89 |
| | ViA | | 19.68 | 20.57 | 21.47 | 21.92 |
| Thickness of first component applied (µm) | | | 133 | 150 | 167 | 175 |
| Thickness of second component applied (µm) | | | 67 | 50 | 33 | 25 |
| Properties | Temporary fixing time [min] | | 2 | 2 | 2.5 | 15 |
| | Yellow index | | 0.34 | 0.37 | 0.4 | 0.4 |
| | Transmittance [%] 400 nm | | 97 | 97 | 96 | 96 |

| | | | | | | |
|---|---|---|---|---|---|---|
| *ViA: Total of vinyl groups bonded to silicon atoms in A1 to A3. *HB: Total of hydrogen atoms bonded to silicon atoms in B1 and B3. *HB1: Total of hydrogen atoms bonded to silicon atoms in B1. *HB3: Total of hydrogen atoms bonded to silicon atoms in B3. | | | | | | |

**[Table 9]**

| | | | Comparative example 6 | Comparative example 7 |
|---|---|---|---|---|
| First component | A1 | Parts by weight | 0.22 | 880 |
| | A2 | Parts by weight | 0.27959 | 1118.36 |
| | A3 | Parts by weight | | |
| | C | Parts by weight | 0.00041 | 1.64 |
| | D | Parts by weight | | |
| | E | Parts by weight | | |
| | Total | Parts by weight | 0.5 | 2000 |
| | Viscosity | [cP] | 8700 | 8700 |
| Second component | A1 | Parts by weight | 1000 | 0.25 |
| | A2 | Parts by weight | 528 | 0.132 |
| | A3 | Parts by weight | | |
| | B1 | Parts by weight | 92 | 0.023 |
| | B2 | Parts by weight | | |
| | B3 | Parts by weight | 380 | 0.095 |
| | B4 | Parts by weight | | |
| | E | Parts by weight | | |
| | Total | Parts by weight | 2000 | 0.5 |
| | Viscosity | [cP] | 8800 | 8800 |
| Total of first component and second component | Content of component C in terms of a plutinum group metal (µm) | | 0.01 | 40 |
| | HB/ViA | | 11.5 | 0.0015 |
| | HB | | 1437.20 | 0.36 |
| | HB1 | | 966.00 | 0.24 |
| | HB3 | | 471.20 | 0.12 |
| | ViA | | 125.10 | 232.67 |
| Thickness of first component applied (µm) | | | 0.5 | 2000 |
| Thickness of second component applied (µm) | | | 2000 | 0.5 |
| Properties | Temporary fixing time [min] | | 30 | 30 |
| | Yellow index | | Not measured due to uncuring | Not measured due to uncuring |
| | Transmittance [%] 400 nm | | Not measured due to uncuring | Not measured due to uncuring |

| | | | | |
|---|---|---|---|---|
| *ViA: Total of vinyl groups bonded to silicon atoms in A1 to A3. *HB: Total of hydrogen atoms bonded to silicon atoms in B1 and B3. *HB1: Total of hydrogen atoms bonded to silicon atoms in B1. *HB3: Total of hydrogen atoms bonded to silicon atoms in B3. | | | | |

**[Table 10]**

| | | | Example 29 | Example 30 | Example 31 | Example 32 |
|---|---|---|---|---|---|---|
| First component | A1 | Parts by weight | 26.4 | 13.2 | 8.8 | 4.4 |
| | A2 | Parts by weight | 33.551 | 16.7754 | 11.1836 | 5.5918 |
| | A3 | Parts by weight | | | | |
| | C | Parts by weight | 0.049 | 0.0246 | 0.0164 | 0.0082 |
| | D | Parts by weight | | | | |
| | E | Parts by weight | | | | |
| | Total | Parts by weight | 60 | 30 | 20 | 10 |
| | Viscosity | [cP] | 8700 | 8700 | 8700 | 8700 |
| Second component | A1 | Parts by weight | 30 | 45 | 50 | 55 |
| | A2 | Parts by weight | 15.84 | 23.76 | 26.4 | 29.04 |
| | A3 | Parts by weight | | | | |
| | B1 | Parts by weight | 2.76 | 4.14 | 4.6 | 5.06 |
| | B2 | Parts by weight | | | | |
| | B3 | Parts by weight | 11.4 | 17.1 | 19 | 20.9 |
| | B4 | Parts by weight | | | | |
| | E | Parts by weight | | | | |
| | Total | Parts by weight | 60 | 90 | 100 | 110 |
| | Viscosity | [cP] | 8800 | 8800 | 8800 | 8800 |
| Total of first component and second component | Content of component C in terms of a plutinum group metal (ppm) | | 20 | 10 | 7 | 3 |
| | HB/ViA | | 4.0 | 7.1 | 8.4 | 9.8 |
| | HB | | 43.12 | 64.67 | 71.86 | 79.05 |
| | HB1 | | 28.98 | 43.47 | 48.30 | 53.13 |
| | HB3 | | 14.14 | 21.20 | 23.56 | 25.92 |
| | ViA | | 10.73 | 9.12 | 8.58 | 8.04 |
| Thickness of first component applied (µm) | | | 60 | 30 | 20 | 10 |
| Thickness of second component applied (µm) | | | 60 | 90 | 100 | 110 |
| Properties | Temporary fixing time [min] | | 1 | 1 | 1 | 1.5 |
| | Yellow index | | 0.2 | 0.2 | 0.16 | 0.12 |
| | Transmittance [%] 400 nm | | 99 | 99 | 99 | 99 |

| | | | | | | |
|---|---|---|---|---|---|---|
| *ViA: Total of vinyl groups bonded to silicon atoms in A1 to A3. *HB: Total of hydrogen atoms bonded to silicon atoms in B1 and B3. *HB1: Total of hydrogen atoms bonded to silicon atoms in B1. *HB3: Total of hydrogen atoms bonded to silicon atoms in B3. | | | | | | |

**[Table 11]**

| | | | Example 33 | Example 34 | Example 35 | Comparative example 8 | Comparative example 9 |
|---|---|---|---|---|---|---|---|
| First component | A1 | Parts by weight | 48.4 | 44 | 39.6 | 0.22 | 880 |
| | A2 | Parts by weight | 61.510 | 55.918 | 50.326 | 0.280 | 1118.360 |
| | A3 | Parts by weight | | | | | |
| | C | Parts by weight | 0.090 | 0.082 | 0.074 | 0.00041 | 1.640 |
| | D | Parts by weight | | | | | |
| | E | Parts by weight | | | | | |
| | Total | Parts by weight | 110 | 100 | 90 | 0.5 | 2000 |
| | | [cP] | 8700 | 8700 | 8700 | 8700 | 8700 |
| Second component | A1 | Parts by weight | 5 | 10 | 15 | 1000 | 0.25 |
| | A2 | Parts by weight | 2.64 | 5.28 | 7.92 | 528.00 | 0.13 |
| | A3 | Parts by weight | | | | | |
| | B1 | Parts by weight | 0.46 | 0.92 | 1.38 | 92 | 0.023 |
| | B2 | Parts by weight | | | | | |
| | B3 | Parts by weight | 1.9 | 3.8 | 5.7 | 380 | 0.095 |
| | B4 | Parts by weight | | | | | |
| | E | Parts by weight | | | | | |
| | Total | Parts by weight | 10 | 20 | 30 | 2000 | 0.5 |
| | Viscosity | [cP] | 8800 | 8800 | 8800 | 8800 | 8800 |
| Total of first component and second component | Content of component C in terms of a plutinum group metal (ppm) | | 37 | 34 | 30 | 0.01 | 40 |
| | HB/ViA | | 0.5 | 1.1 | 1.7 | 11.5 | 0.002 |
| | HB | | 7.19 | 14.37 | 21.56 | 1437.20 | 0.36 |
| | HB1 | | 4.83 | 9.66 | 14.49 | 966.00 | 0.24 |
| | HB3 | | 2.36 | 4.71 | 7.07 | 471.20 | 0.12 |
| | ViA | | 13.42 | 12.88 | 12.34 | 125.10 | 232.67 |
| Thickness of first component applied (µm) | | | 110 | 100 | 90 | 0.5 | 2000 |
| Thickness of second component applied (µm) | | | 10 | 20 | 30 | 2000 | 0.5 |
| Properties | Temporary fixing time [min] | | 8 | 6 | 1 | 30 | 30 |
| | Yellow index | | 0.5 | 0.4 | 0.3 | Not measured due to uncuring | Not measured due to uncuring |
| | Transmittance [%] 400 nm | | 96 | 97 | 98 | Not measured due to uncuring | Not measured due to uncuring |

In Examples, the first component and the second component exhibited an excellent rapid curing property after being contacted with each other. As described in Tables 7 to 11, the first components and the second components comprising the identical components were applied in various thicknesses, but an excellent rapid curing property were obtained as long as the two-pack curable polyorganosiloxane composition formed from the first component and the second component satisfied the requirements in the present invention. These results have shown that the present invention makes it possible to produce an adhered article comprising two substrates without involving radiations or special apparatuses such as heating apparatuses in the curing reaction, namely, even when the substrates are UV-impermeable members or poorly heat resistant members, and further without being affected by outside environments such as moisture. In contrast, the two-pack curable polyorganosiloxane composition in Comparative Examples did not satisfy the requirements in the present invention and failed to exhibit a curing property and an adhesion property even after the lapse of 30 minutes.

### INDUSTRIAL APPLICABILITY

The two-pack curable polyorganosiloxane composition of the present invention, and the method for producing an adhered article using the composition are useful in the bonding of various substrates, in particular, in the bonding of a base unit having an image display section of an image display device such as a cathode-ray tube display, a liquid crystal display, a plasma display or an organic EL display, with a light transmissive protective unit.

## Claims

1. A two-pack curable polyorganosiloxane composition consisting of a first component and a second component, the composition comprising:
(A) an alkenyl group-containing polyorganosiloxane that contains two or more alkenyl groups in the molecule;
(B) a polyorganohydrogensiloxane that has two or more hydrogen atoms bonded to a silicon atom in the molecule; and
(C) a platinum group catalyst,
wherein the ratio of the number of the hydrogen atoms bonded to silicon atoms in (B), H_{B}, to the number of the alkenyl groups in (A), Vi_{A}, is 0.5 to 10.0;
the content of (C) is 0.5 to 2000 ppm in terms of a platinum group metal; the first component comprises (A) and (C); and
the second component comprises (B).

2. The two-pack curable polyorganosiloxane composition according to claim 1, wherein (A) is an alkenyl group-containing linear polyorganosiloxane represented by the formula (Ia): 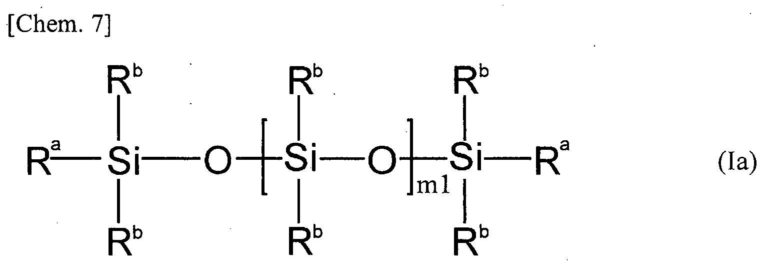 wherein
each R^{a} is independently a C₂-C₆ alkenyl group,
each R^{b} is independently a C₁-C₆ alkyl group or a phenyl group, and
m1 is a number that yields a viscosity at 23°C of from 100 to 100,000 cP.

3. The two-pack curable polyorganosiloxane composition according to claim 1, wherein (B) is one or more polyorganohydrogensiloxanes selected from the group consisting of:
(B1) a cyclic polyorganohydrogensiloxane consisting of a R^{e}₂HSiO_{1/2} unit, wherein each R^{e} is a hydrogen atom or a C₁-C₆ alkyl group, and a SiO_{4/2} unit, and having two or more hydrogen atoms bonded to a silicon atom in the molecule;
(B2) a linear polyorganohydrogensiloxane in which each end is terminated with a R^{d}₃SiO_{1/2} unit and intermediate units consists of a R^{c}R^{d}SiO_{2/2} unit and a R^{d}₂SiO_{2/2} unit, wherein R^{c} is a hydrogen atom, and each R^{d} is independently a C₁-C₆ alkyl group or a phenyl group, and the viscosity at 23°C is from 1 to 10,000 cP; and
(B3) a linear polyorganohydrogensiloxane represented by the formula (III): 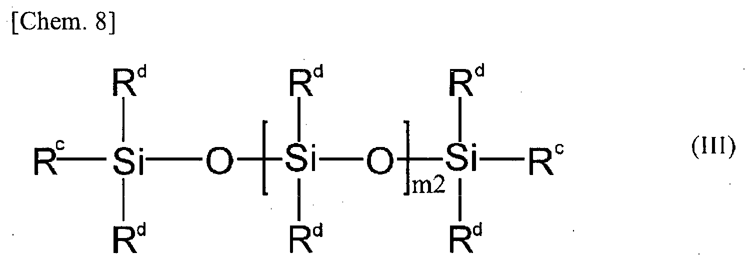 wherein
each R^{c} is a hydrogen atom,
each R^{d} is independently a C₁-C₆ alkyl group or a phenyl group, and
m2 is a number that yields a viscosity of (B3) at 23°C of from 1 to 10,000 cP.

4. The two-pack curable polyorganosiloxane composition according to claim 2, wherein (B) is one or more polyorganohydrogensiloxanes selected from the group consisting of:
(B1) a cyclic polyorganohydrogensiloxane consisting of a R^{e}₂HSiO_{1/2} unit, wherein each R^{e} is a hydrogen atom or a C₁-C₆ alkyl group, and a SiO_{4/2} unit, and having two or more hydrogen atoms bonded to a silicon atom in the molecule;
(B2) a linear polyorganohydrogensiloxane in which each end is terminated with a R^{d}₃SiO_{1/2} unit and intermediate units consists of a R^{c}R^{d}SiO_{2/2} unit and a R^{d}₂SiO_{2/2} unit, wherein R^{c} is a hydrogen atom, and each R^{d} is independently a C₁-C₆ alkyl group or a phenyl group, and the viscosity at 23°C is from 1 to 10,000 cP; and
(B3) a linear polyorganohydrogensiloxane represented by the formula (III): 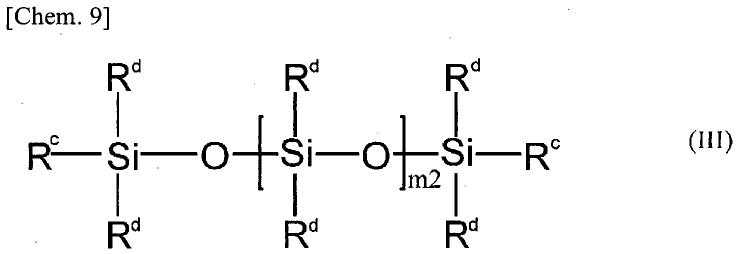 wherein
each R^{c} is a hydrogen atom,
each R^{d} is independently a C₁-C₆ alkyl group or a phenyl group, and
m2 is a number that yields a viscosity of (B3) at 23°C of from 1 to 10,000 cP.

5. The two-pack curable polyorganosiloxane composition according to claim 1, wherein the first component has a viscosity at 23°C of from 100 to 100,000 cP and the second component has a viscosity at 23°C of from 100 to 100,000 cP.

6. The two-pack curable polyorganosiloxane composition according to claim 2, wherein the first component has a viscosity at 23°C of from 100 to 100,000 cP and the second component has a viscosity at 23°C of from 100 to 100,000 cP.

7. The two-pack curable polyorganosiloxane composition according to claim 3, wherein the first component has a viscosity at 23°C of from 100 to 100,000 cP and the second component has a viscosity at 23°C of from 100 to 100,000 cP.

8. The two-pack curable polyorganosiloxane composition according to claim 4, wherein the first component has a viscosity at 23°C of from 100 to 100,000 cP and the second component has a viscosity at 23°C of from 100 to 100,000 cP.

9. The two-pack curable polyorganosiloxane composition according to claim 1, which is an adhesive for adhering two substrates by the steps comprising: applying the first component to an adhering surface of one of the two substrates, applying the second component to a adhering surface of the other of the two substrates that is the first component has not been applied, and joining the applied substrates together and curing the components to bond the substrates to each other.

10. The two-pack curable polyorganosiloxane composition according to claim 1, which is an adhesive for a base unit having an image display section of an image display device and a light transmissive protective unit.

11. A method for producing an adhered article comprising two substrates using the two-pack curable polyorganosiloxane composition according to claim 1, the method comprising: applying the first component to an adhering surface of one of the two substrates, applying the second component to an adhering surface of the other substrate that the first component has not been applied, and joining the applied substrates together and curing the components to bond the substrates to each other.

12. A method for producing an image display device comprising a base unit having an image display section, and a light transmissive protective unit, the base unit and the light transmissive protective being adhered to each other by the two-pack curable polyorganosiloxane composition according to claim 1, the method comprising: applying the first component or the second component to an adhering surface of the base unit of the image display section of the image display device, applying the second component or the first component wherein in the component other than the component applied to the adhering surface of the base unit of the image display section of the image display device to an adhering surface of the light transmissive protective unit, and joining the applied base unit of the image display section of the image display device together with the applied light transmissive protective unit, and curing the components to bond the units to each other.
